# EUROPÄISCHE PATENTSCHRIFT

(11) **EP 3 217 052 B1**
(45) Veröffentlichungstag und Bekanntmachung des Hinweises auf die Patenterteilung: **10.04.2019**
(21) Anmeldenummer: 17158085.5
(22) Anmeldetag: 27.02.2017
(51) Int. Cl.: F16K 11/07

(54) **HYDRAULIKVENTIL**
HYDRAULIC VALVE
VANNE HYDRAULIQUE

(30) Priorität: 09.03.2016 DE 102016104309; 27.04.2016 DE 102016107773
(43) Veröffentlichungstag der Anmeldung: 13.09.2017
(73) Patentinhaber: ECO Holding 1 GmbH, 97828 Marktheidenfeld (DE)
(72) Erfinder: Hugel, Christian, 73420 Wendlingen (DE); Sleziona, Christian, 70599 Stuttgart (DE); Widmann, Johannes, 73760 Ostfiltern (DE)

(56) Entgegenhaltungen:
- DE-A1- 19 938 884
- US-A- 4 941 508
- US-A1- 2011 067 771
- US-A1- 2014 352 828
- US-A1- 2015 252 908

## Beschreibung

### Technisches Gebiet

Die Erfindung betrifft ein Hydraulikventil, insbesondere ein hydraulisches Getriebeventil eines Kraftfahrzeugs.

### Stand der Technik

Mit Hilfe eines Hydraulikventils wird ein Druck in einem System geregelt, wobei ein so genannter Verbraucher mit einem Hydraulikfluid befüllt oder entleert wird. Zur Befüllung des Verbrauchers wird ein Arbeitsanschluss des Hydraulikventils mit einem Versorgungsanschluss des Hydraulikventils durchströmbar verbunden, wobei ein Hydraulikstrom ausgehend vom Versorgungsanschluss in den Arbeitsanschluss geleitet wird. Sofern eine Entleerung des Verbrauchers erfolgen soll, wird der Versorgungsanschluss geschlossen und der Arbeitsanschluss wird fluidisch mit einem Tankanschluss verbunden, so dass aus dem Arbeitsanschluss das Hydraulikfluid in den Tankanschluss strömen kann. Das Hydraulikfluid wird mit Hilfe eines Ventilkolbens des Hydraulikventils zu den Anschlüssen geleitet. Hierzu weist der Ventilkolben eine Steuernut auf, welche, nach Bedarf, in Überdeckung mit Durchströmöffnungen der Anschlüsse gebracht wird.

Aus der DE 10 2014 013 602 B3 ist ein Hydraulikventil, insbesondere ein hydraulisches Getriebeventil, bekannt. Das Hydraulikventil weist drei hydraulische Anschlüsse auf. Es ist bekannt, dass diese drei Anschlüsse als Versorgungsanschluss P, ein Arbeitsanschluss A und ein Tankanschluss T ausgeführt sind. Das Hydraulikventil weist einen axial bewegbaren Ventilkolben auf, dessen Steuernut die Anschlüsse durchströmbar verbindend zu positionieren ist.

Je nach Verbraucher kann dieser einen Volumen aufweisen, der ein großes Volumen besitzt und innerhalb kurzer Zeit, einer so genannten Befülldauer, befüllt werden muss. Das bedeutet, damit die Befülldauer klein gehalten werden kann, muss ein Volumenstrom des Hydraulikfluids so groß wie möglich sein. Beim Befüllen treten große, insbesondere variable, Strömungskräfte auf, welche einem Öffnen der Durchströmöffnung des Versorgungsanschlusses entgegen wirken. Diese Strömungskräfte sind volumenstrom-, weg-, temperatur- und druckabhängig und können die Befülldauer stark erhöhen. Dies ist insbesondere bei einem Einsatz des Hydraulikventils als Getriebeventil zu vermeiden, da infolge dieser erhöhten Befülldauer bspw. beim Anfahren eines Fahrzeugs ein so genanntes Ruckeln auftreten kann.

Ein weiteres Hydraulikventil wird aus der DE 199 38 884 A1 bekannt.

### Offenbarung der Erfindung

Eine Aufgabe der Erfindung ist es, ein Hydraulikventil zu schaffen, insbesondere ein hydraulisches Getriebeventil, welches eine reduzierte Befülldauer aufgrund einer Strömungskraftkompensation erwirkt.

Die vorgenannte Aufgabe wird mit den Merkmalen des unabhängigen Anspruchs 1 gelöst.

Günstige Ausgestaltungen und Vorteile der Erfindung ergeben sich aus den weiteren Ansprüchen, der Beschreibung und der Zeichnung.

Es wird ein Hydraulikventil, insbesondere ein hydraulisches Getriebeventil, vorgeschlagen, welches zur Kompensation von im Betrieb auftretenden Strömungskräften ausgebildet ist. Das Hydraulikventil weist ein Ventilgehäuse mit einer Längsachse und einer sich entlang der Längsachse erstreckenden Aufnahmeöffnung auf. Im Ventilgehäuse sind eine erste Durchströmöffnung eines Versorgungsanschlusses, eine zweite Durchströmöffnung eines Arbeitsanschlusses und eine dritte Durchströmöffnung eines Tankanschlusses ausgebildet, wobei die Durchströmöffnungen zumindest teilweise von einem das Ventilgehäuse durchströmenden Hydraulikfluid durchströmbar ausgebildet sind. Im Ventilgehäuse ist in der Aufnahmeöffnung ein entlang der Längsachse axial verschiebbaren Ventilkolben mit einer Steuernut positioniert. Das Hydraulikventil umfasst weiter eine Verschiebevorrichtung zur axialen Verschiebung des Ventilkolbens, wobei mit Hilfe der Verschiebevorrichtung die Steuernut relativ zu den Durchströmöffnungen positionierbar ist. Zur Kompensation von Strömungskräften des Hydraulikfluids, welche einer ersten Schaltstellung des Hydraulikventil, in der das Hydraulikfluid ausgehend von der ersten Durchströmöffnung in die zweite Durchströmöffnung strömt, entgegen wirkend gerichtet sind, ist der Ventilkolben die Kompensation herbeiführbar ausgestaltet.

Ein wesentlicher Vorteil der Strömungskraftkompensation ist eine Reduzierung einer so genannten Befülldauer eines an dem Arbeitsanschluss angeschlossenen Verbrauchers.

Dies führt bspw. sofern das erfindungsgemäße Hydraulikventil in einem Getriebe eines Kraftfahrzeugs eingesetzt wird, zu einem ruckfreien Schaltvorgang des Getriebes.

Im Betrieb des Hydraulikventils erzeugen die Strömungskräfte des Hydraulikfluids Druckkräfte, welche einer Öffnung der ersten Durchlassöffnung entgegenwirkend gerichtet sind und demzufolge eine schließende Strömungskraft herbeiführen. Der Vorteil des erfindungsgemäßen Hydraulikventils ist darin zusehen, dass unmittelbar auf die Strömungskräfte des Hydraulikfluids, welche am verschiebbaren Ventilkolben angreifen, Einfluss genommen werden kann. Mit anderen Worten kann eine Geometrie des Ventilkolbens so angepasst werden, dass eine Strömungskraft herbeigeführt wird, welche der schließenden Strömungskraft entgegengesetzt gerichtet ist, diese somit kompensiert.

In einer Ausgestaltung des erfindungsgemäßen Hydraulikventils ist die Steuernut die Kompensation herbeiführbar ausgestaltet. Das aus der ersten Durchströmöffnung in die zweite Durchströmöffnung strömende Hydraulikfluid wird über die Steuernut des Ventilkolbens geführt und greift unmittelbar an Steuerflächen der Steuernut an. Damit kann mit Hilfe einer entsprechenden geometrischen Form der Steuernut eine Strömungskraftkompensation erzielt werden. Mittels der Steuernut kann die erste Durchströmöffnung mit der zweiten Durchströmöffnung bei Befüllung des Verbrauchers durchströmbar verbunden werden, somit ist vorteilhaft eine Reduktion einer Versorgungsdruckabhängigkeit der Strömungskräfte erzielt.

Eine Reduzierung der Strömungskräfte könnte mit Hilfe einer Drossel ebenfalls realisiert werden. Allerdings würde dadurch auch der Volumenstrom und damit die Befüllzeit reduziert werden. Zu Vermeidung einer Drossel oder einer Drosselstelle weist die Steuernut eine der ersten Durchströmöffnung zugewandt ausgebildete erste Steuerfläche und eine der ersten Steuerfläche gegenüberliegend ausgebildete zweite Steuerfläche und eine die erste Steuerfläche mit der zweiten Steuerfläche verbindende dritte Steuerfläche auf. Zur Kompensation der Strömungskräfte des Hydraulikfluids ist die erste Steuerfläche zumindest teilweise bezüglich der dritten Steuerfläche oder einer parallel zur dritten Steuerfläche ausgebildeten virtuellen Fläche geneigt und/oder gebogen ausgebildet. Insbesondere ist die erste Steuerfläche vollständig bezüglich der dritten Steuerfläche oder der virtuellen Fläche geneigt und/oder gebogen ausgebildet.

Mit anderen Worten ist eine Schräge an der der ersten Durchströmöffnung zugewandten Seite der Steuernut ausgebildet, welche direkt oder nach einem vertikalen Absatz beginnt, wodurch ein verzögerter Druckabbau eines Druckes des Hydraulikfluids in Richtung der zweiten Durchströmöffnung herbeigeführt wird. Dieser Druckabbau erzielt eine die erste Durchströmöffnung öffnende Druckkraft, die eine in Richtung der zweiten Durchströmöffnung wirkende Druckkraft kompensiert. Der Druckabbau kann mit Hilfe unterschiedlicher Formen der ersten Steuerfläche realisiert werden. Er kann bspw. durch mehrere Segmente mit gleichen und/oder unterschiedlichen Winkeln oder gebogen herbeigeführt werden.

In einer bevorzugten Ausgestaltung zur verbesserten Strömungskraftkompensation ist, sofern die erste Steuerfläche teilweise geneigt ausgebildet ist, ein erster Flächenabschnitt der ersten Steuerfläche und ein zweiter Flächenabschnitt der ersten Steuerfläche ausgebildet ist, wobei zwischen dem zweiten Flächenabschnitt und der dritten Steuerfläche oder der virtuellen Fläche ein Winkel ausgebildet ist, welcher größer als 90° und kleiner als 180° ist, oder sofern die erste Steuerfläche vollständig geneigt ausgebildet ist, zwischen der ersten Steuerfläche und der dritten Steuerfläche oder der virtuellen Fläche ein Winkel ausgebildet ist, welcher größer als 90° und kleiner als 180° ist, oder sofern die erste Steuerfläche teilweise gebogen ausgebildet ist, ein erster Flächenabschnitt der ersten Steuerfläche und ein zweiter Flächenabschnitt der ersten Steuerfläche ausgebildet ist, wobei der zweite Flächenabschnitt gebogen, insbesondere konkav ausgebildet ist, oder sofern die erste Steuerfläche vollständig gebogen ausgebildet ist, die erste Steuerfläche insbesondere konkav ausgebildet ist.

In einer weiteren Ausgestaltung des erfindungsgemäßen Hydraulikventils ist ein Umlenkelement zwischen der ersten Steuerfläche und der zweiten Steuerfläche ausgebildet. Mit Hilfe des Umlenkelementes erfolgt eine gezielte Strömungsausrichtung des Hydraulikfluids und viskose schließende Strömungskräfte werden reduziert. Auch werden schließende Druckkräfte an der zweiten Steuerfläche reduziert, da das Umlenkelement ein schnelles und direktes Anströmen der zweiten Steuerfläche verhindert.

Diese strömungskraftreduzierende Wirkung des Umlenkelementes wird insbesondere dadurch gesteigert, wenn eine Dicke des Umlenkelements ist in Richtung der zweiten Steuerfläche zumindest gleichbleibend oder zunehmend ausgebildet ist. Dies bedeutet mit anderen Worten, dass eine der ersten Steuerfläche zugewandt ausgebildete Wandungsfläche des Umlenkelementes ebenfalls geneigt und/oder in mehrer Segmente unterteilt oder ein Profil mit stetiger Winkeländerung bzw. gebogen ausgebildet sein kann.

Bevorzugt ist eine der ersten Steuerfläche zugewandt ausgebildete erste Wandungsfläche des Umlenkelements geneigt ausgebildet, wobei zwischen der dritte Steuerfläche oder der virtuellen Fläche und der ersten Wandungsfläche ein Winkel ausgebildet, welcher größer als 0° und kleiner als 90° ist.

Die geometrische Form des Ventilkolbens ist dem Einsatzbereich des Hydraulikventils anzupassen.

In einer weiteren Ausgestaltung des erfindungsgemäßen Hydraulikventils ist ein größter Abstand zwischen der ersten Steuerfläche und einer der ersten Steuerfläche zugewandt ausgebildeten ersten Wandungsfläche des Umlenkelementes größer als eine Wanddicke des Ventilgehäuses zwischen der ersten Durchströmöffnung und der zweiten Durchströmöffnung und kleiner als die Wanddicke zuzüglich eines axialen Durchmessers der zweiten Durchströmöffnung. Damit ist eine gesicherte Umlenkung des Hydraulikfluids in die zweite Durchströmöffnung ausgehend von der ersten Durchströmöffnung realisiert.

In einer weiteren Ausgestaltung des erfindungsgemäßen Hydraulikventils ist ein freier Abstand zwischen einer der zweiten Steuerfläche gegenüberliegend ausgebildeten zweiten Wandungsfläche des Umlenkelementes und der zweiten Steuerfläche ausgehend von einem größten Durchmesser des Umlenkelementes in Richtung der dritten Steuerfläche variierend ausgebildet, wobei der freie Abstand in Richtung der dritten Steuerfläche abnehmend ausgebildet ist. Dies führt zu einer weiteren Reduzierung schließender Strömungskräfte des Hydraulikfluids.

In einer weiteren Ausgestaltung des erfindungsgemäßen Hydraulikventils weist das Umlenkelement einen von der ersten Steuerfläche beabstandeten Ring auf, wobei der Ring eine parallel zur virtuellen Fläche ausgebildete Ringfläche aufweist. Dies führt vorteilhaft zu einem kostengünstigen und eine hohen Lebensdauer aufweisenden Hydraulikventil, da mit Hilfe des Ringes eine der zweiten Durchströmöffnung zugewandt ausgebildete Spitze des Umlenkelementes stumpf ausgestaltet werden kann.

Bevorzugt ist das Umlenkelement zur kostengünstigen Herstellung des Hydraulikventils, bspw. wobei der Ventilkolben als Drehteil ausgeführt ist, ringartig die Steuernut umfassend ausgebildet.

Das erfindungsgemäße Hydraulikventil weist in einer weiteren Ausgestaltung die Verschiebevorrichtung umfassend einen Magnetanker und ein Federelement auf, wobei das Federelement am der ersten Durchströmöffnung benachbart ausgebildeten ersten Ende des Ventilgehäuses und der Magnetanker am der dritten Durchströmöffnung benachbart ausgebildeten zweiten Ende des Ventilgehäuses angeordnet sind.

Vorzugsweise ist im Ventilgehäuse ein Dichtelement angeordnet, welches von einem als Kolbenstößel ausgebildeten Ende des Ventilkolbens durchragt wird. Durch den Einsatz des Dichtelementes kann ein Austausch von Schmutzpartikeln, welche die magnetischen oder die hydraulischen Funktionen beeinträchtigen, zwischen dem Magnet- und dem Hydraulikteil des Hydraulikventils deutlich reduziert werden. Insbesondere kann ein negativer Einfluss auf den Ankerlauf im Polrohr und die hierdurch hervorgerufene Magnet/Ventil-Hysterese verhindert werden. Insgesamt erhöht sich die Robustheit des Hydraulikventils. Ebenso reduzieren sich die magnetischen Querkräfte im Bereich des Kolbenstößels.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: in einem Ausschnitt einen Schnitt durch ein Hydraulikventil gemäß dem Stand der Technik in einer ersten Schaltstellung;
- Fig. 2: ein p-t-Diagramm mit Linien unterschiedlicher Versorgungsdrücke des Hydraulikventils gem. Fig. 1;
- Fig. 3: einen Schnitt durch ein erfindungsgemäßes Hydraulikventil in der zweiten Schaltstellung;

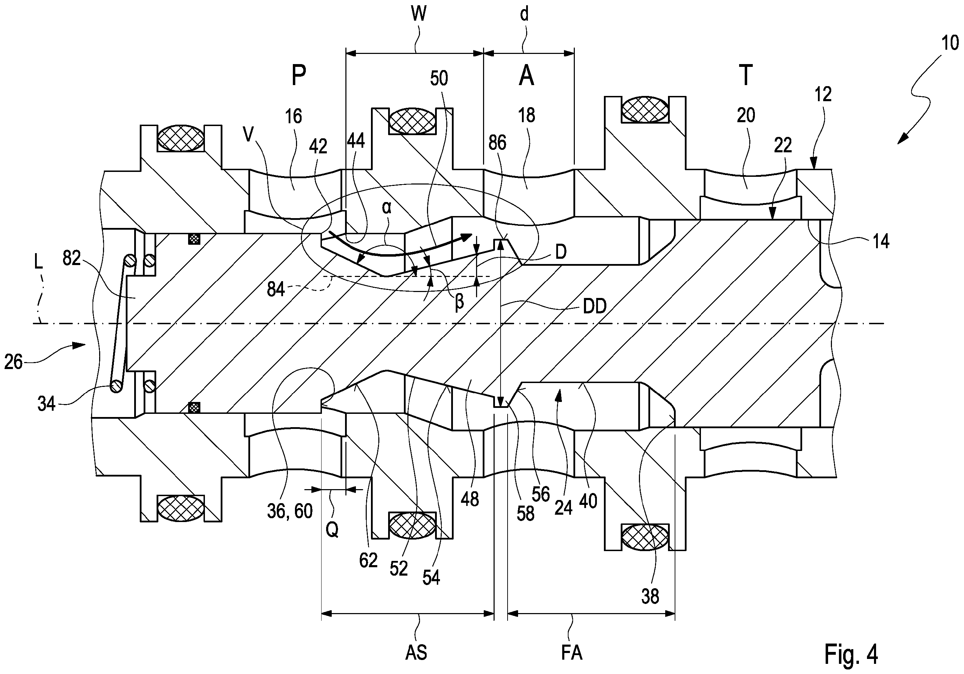

- Fig. 4: in einem Ausschnitt einen Schnitt durch das Hydraulikventil gemäß dem Fig. 3 in einer ersten Schaltstellung; und
- Fig. 5: in einer Detailansicht V das erfindungsgemäße Hydraulikventil in der ersten Schaltstellung;
- Fig. 6: ein p-t-Diagramm mit Linien unterschiedlicher Versorgungsdrücke des erfindungsgemäßen Hydraulikventils.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen. Aus Gründen der Übersichtlichkeit ist es möglich, dass die Komponenten nicht in allen Figuren mit ihrem Bezugszeichen versehen sind, ohne jedoch ihre Zuordnung zu verlieren.

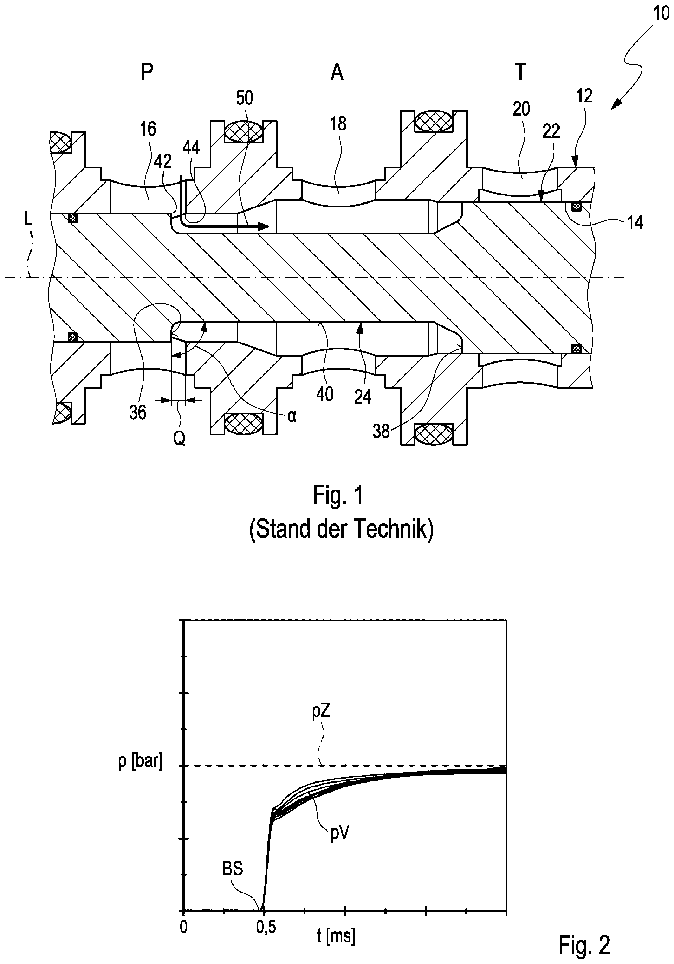

Ein Hydraulikventil 10, welches gemäß dem Stand der Technik aufgebaut ist, ist in Fig. 1 in einem Ausschnitt eines Schnitts durch das Hydraulikventil 10 dargestellt. Das Hydraulikventil 10, das in Fig. 1 als Druckregelventil für ein Getriebe, somit als Getriebeventil, ausgebildet ist, umfasst ein Ventilgehäuse 12 mit einer Längsachse L, wobei im Ventilgehäuse 12 eine Aufnahmeöffnung 14 sich entlang der Längsachse L erstreckend ausgebildet ist.

Das Ventilgehäuse 12 umfasst weiter eine erste Durchströmöffnung 16, welche einem Versorgungskanal P zum Zuführen eines Hydraulikfluids, eine zweite Durchströmöffnung 18, welche einem Arbeitsanschluss A zum insbesondere Zuführen des Hydraulikfluids zum Verbraucher und eine dritte Durchströmöffnung 20, welche einem Tankanschluss T zum Ableiten des Hydraulikfluids aus dem Verbraucher zugeordnet ist.

In der Aufnahmeöffnung 14 ist ein Ventilkolben 22 entlang der Längsachse L axial positionierbar angeordnet. Mit anderen Worten ist der Ventilkolben 22 im Ventilgehäuse 12 axial verschiebbar. Das Ventilgehäuse 12 mit dem Ventilkolben 22 bildet einen Hydraulikteil des Hydraulikventils 10.

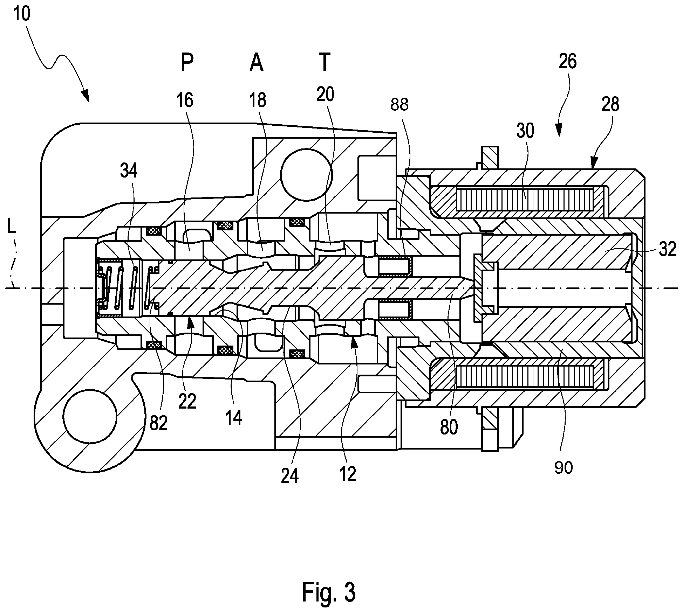

Der Ventilkolben 22 weist eine Steuernut 24 auf. Die Steuernut 24 ist in Form einer Ringnut ausgestaltet. Mit Hilfe der Steuernut 24 können die Durchströmöffnungen 16, 18, 20 geöffnet oder geschlossen werden, wobei eine Strömung des Hydraulikfluids eingestellt werden kann. Zum Öffnen oder Schließen der Durchströmöffnungen 16, 18, 20 wird der Ventilkolben 22 mit Hilfe einer Verschiebevorrichtung 26 axial verschoben. Die Verschiebevorrichtung 26 ist in Fig. 3 dargestellt, welche ein erfindungsgemäßes Hydraulikventil 10 zeigt.

Die Verschiebevorrichtung 26 umfasst ein bestrombares erstes Verschiebeteil 28 mit einem von einer bestrombaren Spule 30 umfassten Magnetankers 32 und ein nichtbestrombares zweites Verschiebeteil 34, welches als Federelement, in diesem Ausführungsbeispiel in Form einer Spiralfeder ausgebildet ist und sich am Ventilgehäuse 12 abstützt. Das erste Verschiebeteil 28 der Verschiebevorrichtung 26 stellt einen Magnetteil des Hydraulikventils 10 dar.
Mit Hilfe der Verschiebevorrichtung 26 wird der Ventilkolben 22 im Betrieb des Hydraulikventils 10 so positioniert, dass mit Hilfe der Steuernut 24 ein Durchfluss des Hydraulikfluids ausgehend von der ersten Durchströmöffnung 16 in die zweite Durchströmöffnung 18 oder ausgehend von der zweiten Durchströmöffnung 18 in die dritte Durchströmöffnung 20 realisiert werden kann. Sofern das Hydraulikfluid ausgehend von der ersten Durchströmöffnung 16 in die zweite Durchströmöffnung 18 fließen kann, befindet sich das Hydraulikventil 10 in einer ersten Schaltstellung. In einer zweiten Schaltstellung befindet es sich, wenn das Hydraulikfluid ausgehend von der zweiten Durchströmöffnung 18 in die dritte Durchströmöffnung 20 strömen kann. Mit anderen Worten wird in der ersten Schaltstellung der Arbeitsanschluss A mit Hydraulikfluid versorgt, wohingegen in der zweiten Schaltstellung das Hydraulikfluid aus dem Arbeitsanschluss A in den Tankanschluss T strömt, wie in Fig. 3 dargestellt ist.

Zur Positionierung des Ventilkolbens 22 in die erste Schaltstellung wird das erste Verschiebeteil 28, welches am ersten Ende 80 des Ventilkolbens 22 angeordnet ist, bestromt, wobei der Magnetanker 32, aufgrund eines erzeugten Magnetfeldes, in Richtung des Federelements 34 bewegt wird, welches an einem vom ersten Ende 80 abgewandt angeordneten zweiten Ende des Ventilkolbens 22 vorgesehen ist. Wie ersichtlich, ist das erste Ende 80 als Kolbenstößel ausgebildet.
Der Magnetanker 32 steht mit dem Ventilkolben 22 in Verbindung und drückt diesen in Richtung des Federelementes 34. Dadurch wird das Federelement 34 vorgespannt. Sobald die Bestromung endet, wird der Ventilkolben 22 durch das vorgespannte Federelement 34 in Richtung des ersten Verschiebteils 28 gedrückt. Im Betrieb des Hydraulikventils 10 wird ein am Ventilkolben 22 angreifendes Kräftegleichgewicht, induziert durch das erste Verschiebeteil 28 und das zweite Verschiebteil 34, angestrebt.

Die Steuernut 24 weist eine der ersten Durchströmöffnung 16 zugewandt ausgebildete erste Steuerfläche 36 und eine der ersten Steuerfläche 36 gegenüberliegend ausgebildete zweite Steuerfläche 38 auf. Die erste Steuerfläche 36 und die zweite Steuerfläche 38 sind mittels einer dritten Steuerfläche 40 der Steuernut 24 verbunden. Die erste Steuerfläche 36 des Hydraulikventils 10 gemäß dem Stand der Technik ist bezüglich der dritten Steuerfläche 40 senkrecht angeordnet, wobei zwischen der ersten Steuerfläche 36 und der dritten Steuerfläche 40 ein erster Winkel α mit 90° ausgebildet ist.

Die erste Steuerfläche 36 besitzt eine dem Ventilgehäuse 12 gegenüberliegend ausgebildete erste Steuerkante 42, mittels derer die erste Durchströmöffnung 16 geschlossen oder geöffnet werden kann. Zum Öffnen der ersten Durchströmöffnung 16 wird der Ventilkolben 22 soweit axial in Richtung des Federelementes 34 verschoben, bis zwischen der ersten Steuerkante 42 und einer zweiten Steuerkante 44 der ersten Durchströmöffnung 16, welche der zweiten Durchströmöffnung 18 zugewandt angeordnet ist, ein Strömungsquerschnitt Q ausgebildet ist.

In einem in Fig. 2 dargestellten p-t-Diagramm, mit anderen Worten Druck-ZeitDiagramm, sind Linien von im Arbeitsanschluss A anliegenden Drücken p bei unterschiedlicher Versorgungsdrücke pV des Hydraulikventils 10 gemäß Fig. 1 eingetragen, wobei der Druck p in der Einheit [bar] und die Zeit t in der Einheit [ms] angegeben ist. Die gestrichelt eingetragene Linie entspricht dem im Arbeitsanschluss A zu erreichenden Zieldruck pZ. Im p-t-Diagramm ist somit dargestellt, welche Zeitdauer ausgehend von einem Bestromungsstartpunkt BS der Spule 30 erforderlich ist, diesen geforderten Druck pZ bei unterschiedlichen Versorgungsdrücken pV im Arbeitsanschluss A zu erreichen. Das Erreichen von 90% eines Zieldruckes von 2bar im Arbeitsanschluss A erfolgt bei dem gemäß Fig. 1 ausgebildeten Hydraulikventil 10 in Abhängigkeit eines Versorgungsdruckes pV von 20bar innerhalb von ca. 555ms.

In Abhängigkeit eines Volumenstromes des Hydraulikfluids ausgehend vom Versorgungskanal P in den Arbeitsanschluss A kann es beim Hydraulikventil 10 gemäß dem Stand der Technik zu einem unkontrollierten Öffnen der dritten Durchströmöffnung 20, d.h. zum Schließen der ersten Durchströmöffnung 16 kommen, sofern ein Kräftegleichgewicht zwischen einer ersten Kraft ausgehend vom ersten Verschiebeteil 28 der Verschiebevorrichtung 26 und einer zweiten Kraft, ausgehend vom zweiten Verschiebeteil 34 der Verschiebevorrichtung 26 durch Strömungskräfte des Hydraulikfluids aufgehoben ist. Mit anderen Worten bedeutet dies, dass die Strömungskräfte des Hydraulikfluids einen Druck insbesondere auf die zweite Steuerfläche 38 ausüben, welcher so groß ist, dass der Ventilkolben 22 in Richtung des Magnetankers 32 verschoben wird. Das angestrebte Kräftegleichgewicht wird gestört. Mit anderen Worten bedeutet das, dass die Strömungskräfte des Hydraulikfluids einer ersten Schaltstellung des Hydraulikventils 10, in der das Hydraulikfluid ausgehend von der ersten Durchströmöffnung 16 in die zweite Durchströmöffnung 18 fließen soll, entgegen wirkend gerichtet. Das heißt, dass eine Kraft durch die Strömungskräfte herbeigeführt wird, die den Ventilkolben 22 zumindest in Richtung seiner Position in der zweiten Schaltstellung verschiebt.

Zur Kompensation der Strömungskräfte des Hydraulikfluids ist die erste Steuerfläche 36 teilweise bezüglich einer parallel mit der dritten Steuerfläche 40 ausgebildeten virtuellen Fläche 84 geneigt ausgebildet. Die erste Steuerfläche 36 weist einen die erste Steuerkante 42 aufweisenden ersten Flächenabschnitt 60 und einen an den ersten Flächenabschnitt 60 angrenzend angeordneten zweiten Flächenabschnitt 62 auf, wobei zwischen dem zweiten Flächenabschnitt 62 und der virtuellen Fläche 84 der erste Winkel α mit einem Wert von 155° ausgebildet ist. Mit anderen Worten weist der erste Winkel α einen Wert größer als 90° auf.

In einem nicht näher dargestellten Ausführungsbeispiel ist die erste Steuerfläche 36 vollständig gebogen, insbesondere konkav ausgebildet. Ein Übergangsbereich der ersten Steuerfläche 36, welcher an die dritte Steuerfläche 40 angrenzend ausgebildet ist, ist bevorzugt sich tangential an die dritte Steuerfläche 40 annähernd ausgeführt. Ebenso könnte die erste Steuerfläche 36 auch nur teilweise gebogen ausgebildet sein, wobei der erste Flächenabschnitt 60 eben ausgebildet ist und der zweite Flächenabschnitt 62 gebogen ausgeführt ist. Auch könnte die erste Steuerfläche 36 vollständig geneigt ausgebildet sein.

Zur weiteren Beeinflussung der Strömungskräfte weist die Steuernut 24 ein Umlenkelement 48 auf. Das Umlenkelement 48 ist in Form eines zwischen der ersten Steuerfläche 36 und der zweiten Steuerfläche 38 positionierten Mittelstegs ausgebildet und umfasst die Steuernut 24 ringartig. Mit Hilfe der Umlenkelements 48 wird das aus der ersten Durchströmöffnung 16 über die erste Steuerfläche 36 in die Steuernut 24 einströmende Hydraulikfluid in Richtung der zweiten Durchströmöffnung 18 entsprechend dem Pfeil 50 gelenkt.

Das Umlenkelement 48 weist eine strömungsangepasste Kontur 52 auf, wobei die Kontur 52 bevorzugt so ausgebildet ist, dass die Strömungskräfte des Hydraulikfluids in Richtung der Längsachse L auftretende axiale Kraftkomponenten aufweisen, welche kleiner sind als die senkrecht zu ihnen wirkenden vertikale Kraftkomponenten.

Eine der ersten Steuerfläche 36 zugewandt ausgebildete erste Wandungsfläche 54 des Umlenkelements 48 ist gegenüber der virtuellen Fläche 84, einen zweiten Winkel β einschließend, geneigt ausgebildet, wobei im dargestellten Ausführungsbeispiel der zweite Winkel β einen Wert von 12,5° aufweist. Im dargestellten Ausführungsbeispiel weist das Umlenkelement 48 eine Form eines Kegels auf.

Ebenso kann das Umlenkelement 48 auch eine vom Kegel abweichende Form besitzen. Bspw. kann die erste Wandungsfläche 54 konkav ausgebildet sein. Grundsätzlich weist somit das Umlenkelement 48 eine in Richtung der zweiten Steuerkante 38 zunehmende Dicke D auf.

Damit eine strömungsgünstige Umlenkung des Hydraulikfluids herbeigeführt werden kann, wobei die auf das Umlenkelement 48 auftreffenden, in Richtung der Längsachse L resultierenden Strömungskräfte einen möglichst kleinen Wert aufweisen, ist ein Abstand AS zwischen der ersten Steuerfläche 36 und der ersten Wandungsfläche 54 größer als eine Wanddicke W des Ventilgehäuses 12 zwischen der ersten Durchströmöffnung 16 und der zweiten Durchströmöffnung 18. Zusätzlich ist der Abstand AS höchstens so groß wie eine Summe der Wanddicke W und einem Durchmesser D der zweiten Durchgangsöffnung 18. Bevorzugt weist der Abstand AS einen Wert gemäß der Gleichung AS = W + d/2 auf.

Zur Herbeiführung einer in der zweiten Schaltstellung günstigen Strömung des Hydraulikfluids aus dem Arbeitsanschluss A in den Tankanschluss T ist ein freier Abstand FA, welcher zwischen einer der zweiten Steuerfläche 38 gegenüberliegend ausgebildeten zweiten Wandungsfläche 54 des Umlenkelementes 48 und der zweiten Steuerfläche 38 in radialer Richtung des Umlenkelementes 48 variierend ausgebildet. Der freie Abstand FA nimmt ausgehend von einem größten Durchmesser DD des Umlenkelementes 48 in Richtung der dritten Steuerfläche 40 ab.

Das Umlenkelement 48 weist einen von der ersten Steuerfläche 36 beabstandeten Ring 58 auf, wobei der Ring 58 eine parallel zur virtuellen Fläche 84 ausgebildete Ringfläche 86 aufweist.

Ein in Fig. 3 dargestelltes Dichtelement 88 in Form einer im Querschnitt u-förmigen, beispielsweise tiefgezogenen Scheibe dient der räumlichen Trennung von Magnet- und Hydraulikteil des Hydraulikventils 10 und wird vorzugsweise in das Ventilgehäuse 12 eingepresst, wobei der Kolbenstößel das Dichtelement 88 durch ragt.
Hierdurch kann ein Austausch von Schmutzpartikeln, welche die magnetischen und/oder die hydraulischen Funktionen beeinträchtigen, zwischen dem Magnet- und dem Hydraulikteil des Hydraulikventils 10 deutlich reduziert werden. Insbesondere kann ein negativer Einfluss auf den Ankerlauf im Polrohr 90 und die hierdurch hervorgerufene Magnet/Ventil-Hysterese verhindert werden.
Die Abdichtung des Dichtelementes 88 mit dem Ventilgehäuse 12 erfolgt als Spaltdichtung, wobei durch das Verhältnis Dichtlänge zu Spalthöhe des Dichtspaltes ein Austausch des Hydraulikfluids auf ein Minimum reduziert werden kann.
Durch das Dichtelement 88 kann ein Austauschvolumen zwischen dem Magnet- und Hydraulikteil des Hydraulikventils 10 durch eine Verringerung des sich im Magnetteil befindlichen Kolbenstößelvolumens deutlich reduziert werden.
Es erhöhen sich insgesamt die Robustheit und die Dauerhaltbarkeit des Hydraulikventils 10 aufgrund des geringeren Schmutzeintrages in das Magnetteil. Ebenso können die magnetischen Querkräfte im Bereich des Kolbenstößels und damit die Ventilhysterese reduziert werden.

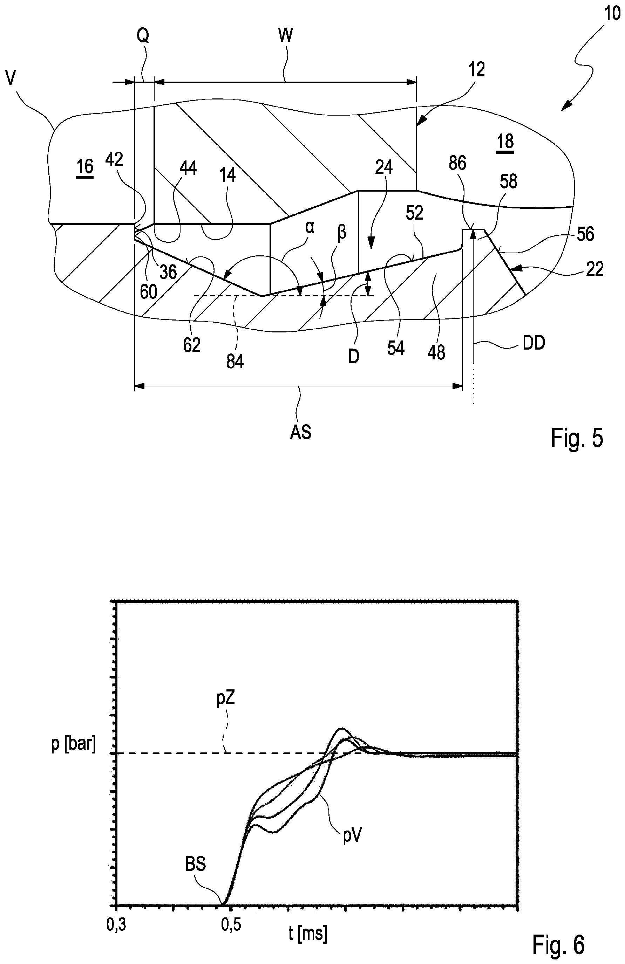

In dem in Fig. 6 dargestellten p-t-Diagramm sind die Linien von im Arbeitsanschluss A anliegenden Drücken p bei unterschiedlichen Versorgungsdrücke pV des erfindungsgemäßen Hydraulikventils 10 gemäß Fig. 3 eingetragen. Das Erreichen von 90% des Zieldruckes von 2bar im Arbeitsanschluss A erfolgt bei dem erfindungsgemäßen Hydraulikventil 10 in Abhängigkeit eines Versorgungsdruckes pV von 20bar innerhalb von ca. 170m, somit in einer deutlich kürzeren Zeit.

### Bezugszeichenliste

- 10: Hydraulikventil
- 12: Ventilgehäuse
- 14: Aufnahmeöffnung
- 16: erste Durchströmöffnung
- 18: zweite Durchströmöffnung
- 20: dritte Durchströmöffnung
- 22: Ventilkolben
- 24: Steuernut
- 26: Verschiebevorrichtung
- 28: erstes Verschiebeteil
- 30: Spule
- 32: Magnetanker
- 34: zweites Verschiebeteil
- 36: erste Steuerfläche
- 38: zweite Steuerfläche
- 40: dritte Steuerfläche
- 42: erste Steuerkante
- 44: zweite Steuerkante
- 48: Umlenkelement
- 50: Pfeil
- 52: Kontur
- 54: erste Wandungsfläche
- 56: zweite Wandungsfläche
- 58: Ring
- 60: erster Flächenabschnitt
- 62: zweiter Flächenabschnitt
- 80: erstes Ende
- 82: zweites Ende
- 84: virtuelle Fläche
- 86: Ringfläche
- 88: Dichtscheibe
- 90: Polrohr

- A: Arbeitsanschluss
- AS: größter Abstand
- BS: Bestromungsstartpunkt
- D: Dicke
- DD: größter Durchmesser
- FA: freier Abstand
- L: Längsachse
- P: Versorgungsanschluss
- Q: Querschnitt
- T: Tankanschluss
- W: Wanddicke

- d: Durchmesser
- p: Druck
- pV: Versorgungsdruck
- pZ: Zieldruck
- t: Zeit

- α: erster Winkel
- β: zweiter Winkel

## Patentansprüche

1. Hydraulikventil (10), insbesondere hydraulisches Getriebeventil, umfassend
- ein Ventilgehäuse (12) mit einer Längsachse (L) und einer sich entlang der Längsachse (L) erstreckenden Aufnahmeöffnung (14), wobei das Ventilgehäuse (12) eine erste Durchströmöffnung (16) eines Versorgungsanschlusses (P), eine zweite Durchströmöffnung (18) eines Arbeitsanschlusses (A) und eine dritte Durchströmöffnung (20) eines Tankanschlusses (T) aufweist, wobei die Durchströmöffnungen (16, 18, 20) zumindest teilweise von einem das Ventilgehäuse (12) durchströmenden Hydraulikfluid durchströmbar ausgebildet sind,
- einem im Ventilgehäuse (12) in der Aufnahmeöffnung (14) entlang der Längsachse (L) axial verschiebbaren Ventilkolben (22) mit einer Steuernut (24),
- mit einer Verschiebevorrichtung (26) zur axialen Verschiebung des Ventilkolbens (22), wobei mit Hilfe der Verschiebevorrichtung (26) die Steuernut (24) relativ zu den Durchströmöffnungen (16, 18, 20) positionierbar ist,
wobei die Steuernut (24) des Ventilkolbens (22) zur Kompensation von Strömungskräften des Hydraulikfluids, welche einer ersten Schaltstellung des Hydraulikventils (10), in der das Hydraulikfluid ausgehend von der ersten Durchströmöffnung (16) in die zweite Durchströmöffnung (18) strömt, entgegen wirkend gerichtet sind, die Kompensation herbeiführbar ausgestaltet ist und die Steuernut (24) eine der ersten Durchströmöffnung (16) zugewandt ausgebildete erste Steuerfläche (36) und eine der ersten Steuerfläche (36) gegenüberliegend ausgebildete zweite Steuerfläche (38) aufweist, und wobei die Steuernut (24) eine die erste Steuerfläche (36) mit der zweiten Steuerfläche (38) verbindende dritte Steuerfläche (40) aufweist, wobei die Steuerfläche (36) zumindest teilweise bezüglich der dritten Steuerfläche (40) oder einer parallel zur dritten Steuerfläche (40) ausgebildeten virtuellen Fläche (84) geneigt und/oder gebogen ausgebildet ist und ein Umlenkelement (48) zwischen der ersten Steuerfläche (36) und der zweiten Steuerfläche (38) ausgebildet ist, **dadurch gekennzeichnet, dass** die erste Steuerfläche (36) einen eine erste Steuerkante (42) aufweisenden ersten Flächenabschnitt (60) und einen an den ersten Flächenabschnitt (60) angrenzend angeordneten zweiten Flächenabschnitt (62) aufweist, wobei der erste Flächenabschnitt (60) vollständig bezüglich der dritten Steuerfläche (40) oder der virtuellen Fläche (84) geneigt ausgebildet ist und zwischen dem zweiten Flächenabschnitt (62) und der virtuellen Fläche (84) ein erster Winkel (α) mit einem Wert größer als 90° und kleiner als 180° ausgebildet ist, und
dass eine der ersten Steuerfläche (36) zugewandt ausgebildete erste Wandungsfläche (54) des Umlenkelements (48) derart geneigt ausgebildet ist, dass zwischen der dritte Steuerfläche (40) oder der virtuellen Fläche (84) und der ersten Wandungsfläche (54) ein Winkel (β) ausgebildet ist, welcher größer als 0° und kleiner als 90° ist.

2. Hydraulikventil nach Anspruch1,
**dadurch gekennzeichnet, dass** eine Dicke (D) des Umlenkelements (48) in Richtung der zweiten Steuerfläche (38) zumindest gleichbleibend oder zunehmend ausgebildet ist.

3. Hydraulikventil nach einem Ansprüche 1 oder2,
**dadurch gekennzeichnet, dass** ein Abstand (AS) zwischen der ersten Steuerfläche (36) und einer der ersten Steuerfläche (36) zugewandt ausgebildeten ersten Wandungsfläche (54) des Umlenkelementes (48) größer ist als eine Wanddicke (W) des Ventilgehäuses (12) zwischen der ersten Durchströmöffnung (16) und der zweiten Durchströmöffnung (18) und kleiner ist als die Wanddicke (W) zuzüglich eines axialen Durchmessers (d) der zweiten Durchströmöffnung (18).

4. Hydraulikventil nach einem der Ansprüche 1 bis 3,
**dadurch gekennzeichnet, dass** ein freier Abstand (FA) zwischen einer der zweiten Steuerfläche gegenüberliegend ausgebildeten zweiten Wandungsfläche ( ) des Umlenkelementes (48) und der zweiten Steuerfläche (38) ausgehend von einem größten Durchmesser (DD) des Umlenkelementes (48) in Richtung der dritten Steuerfläche (40) variierend ausgebildet ist, wobei insbesondere der freie Abstand (FA) in Richtung der dritten Steuerfläche (40) abnehmend ausgebildet ist.

5. Hydraulikventil nach einem der vorhergehenden Ansprüche,
**dadurch gekennzeichnet, dass** das Umlenkelement (48) einen von der ersten Steuerfläche (36) beabstandeten Ring (58) aufweist, wobei der Ring (58) eine parallel zur virtuellen Fläche (84) ausgebildete Ringfläche (86) aufweist.

6. Hydraulikventil nach einem der vorhergehenden Ansprüche,
**dadurch gekennzeichnet, dass** das Umlenkelement (48) ringartig die Steuernut (24) umfassend ausgebildet ist.

7. Hydraulikventil nach einem der vorhergehenden Ansprüche,
**dadurch gekennzeichnet, dass** die Verschiebevorrichtung (26) ein Magnetanker (32) und ein Federelement (34) aufweist, wobei das Federelement (34) am der ersten Durchströmöffnung (16) benachbart ausgebildeten ersten Ende (80) des Ventilgehäuses (12) und der Magnetanker (32) am der dritten Durchströmöffnung (20) benachbart ausgebildeten zweiten Ende (82) des Ventilgehäuses (12) angeordnet sind.

8. Hydraulikventil nach einem der vorhergehenden Ansprüche,
**dadurch gekennzeichnet, dass** im Ventilgehäuse (12) ein Dichtelement (88) angeordnet ist, welches von einem als Kolbenstößel ausgebildeten Ende (80) des Ventilkolbens (22) durchragt wird.

## Claims

1. Hydraulic valve (10), in particular hydraulic transmission valve, comprising
- a valve housing (12) with a longitudinal axis (L) and a receiving opening (14) which extends along the longitudinal axis (L), the valve housing (12) having a first throughflow opening (16) of a supply connector (P), a second throughflow opening (18) of a working connector (A) and a third throughflow opening (20) of a tank connector (T), the throughflow openings (16, 18, 20) being configured such that they can be flowed through at least partially by a hydraulic fluid which flows through the valve housing (12),
- a valve piston (22) with a control groove (24), which valve piston (22) can be displaced axially along the longitudinal axis (L) in the receiving opening (14) in the valve housing (12),
- with a displacing apparatus (26) for the axial displacement of the valve piston (22), it being possible for the control groove (24) to be positioned relative to the throughflow openings (16, 18, 20) with the aid of the displacing apparatus (26),
the control groove (24) of the valve piston (22) being configured so as to be capable of bringing about the compensation for the compensation of flow forces of the hydraulic fluid which are directed so as to counteract a first switching position of the hydraulic valve (10), in which first switching position, starting from the first throughflow opening (16), the hydraulic fluid flows into the second throughflow opening (18), and the control groove (24) having a first control face (36) which is configured so as to face the first throughflow opening (16), and a second control face (38) which is configured so as to lie opposite the first control face (36), and the control groove (24) having a third control face (40) which connects the first control face (36) to the second control face (38), the control face (36) being of at least partially inclined and/or curved configuration with regard to the third control face (40) or a virtual face (84) which is configured parallel to the third control face (40), and a deflecting element (48) being configured between the first control face (36) and the second control face (38), **characterized in that** the first control face (36) has a first face section (60) which has a first control edge (42), and a second face section (62) which is arranged so as to adjoin the first face section (60), the first face section (60) being of completely inclined configuration with regard to the third control face (40) or the virtual face (84), and a first angle (α) with a value of greater than 90° and less than 180° being configured between the second face section (62) and the virtual face (84), and
**in that** a first wall face (54) of the deflecting element (48), which first wall face (54) is configured so as to face the first control face (36), is of inclined configuration such that an angle (β) which is greater than 0° and less than 90° is configured between the third control face (40) or the virtual face (84) and the first wall face (54).

2. Hydraulic valve according to Claim 1, **characterized in that** a thickness (D) of the deflecting element (48) is of at least constant or increasing configuration in the direction of the second control face (38).

3. Hydraulic valve according to either of Claims 1 and 2, **characterized in that** a spacing (AS) between the first control face (36) and a first wall face (54) of the deflecting element (48), which first wall face (54) is configured so as to face the first control face (36), is greater than a wall thickness (W) of the valve housing (12) between the first throughflow opening (16) and the second throughflow opening (18) and is smaller than the wall thickness (W) plus an axial diameter (d) of the second throughflow opening (18).

4. Hydraulic valve according to one of Claims 1 to 3, **characterized in that** a free spacing (FA) between a second wall face ( ) of the deflecting element (48), which second wall face is configured so as to lie opposite the second control face, and the second control face (38) is of varying configuration starting from a greatest diameter (DD) of the deflecting element (48) in the direction of the third control face (40), the free spacing (FA) being, in particular, of decreasing configuration in the direction of the third control face (40).

5. Hydraulic valve according to one of the preceding claims, **characterized in that** the deflecting element (48) has a ring (58) which is spaced apart from the first control face (36), the ring (58) having a ring face (86) which is configured parallel to the virtual face (84).

6. Hydraulic valve according to one of the preceding claims, **characterized in that** the deflecting element (48) is configured so as to surround the control groove (24) in a ring-like manner.

7. Hydraulic valve according to one of the preceding claims, **characterized in that** the displacing apparatus (26) has a magnet armature (32) and a spring element (34), the spring element (34) being arranged at that first end (80) of the valve housing (12) which is configured adjacently with respect to the first throughflow opening (16), and the magnet armature (32) being arranged at that second end (82) of the valve housing (12) which is configured adjacently with respect to the third throughflow opening (20).

8. Hydraulic valve according to one of the preceding claims, **characterized in that** a sealing element (88) is arranged in the valve housing (12), which sealing element (88) is penetrated by an end (80) of the valve piston (22), which end is configured as a piston rod.

## Revendications

1. Soupape hydraulique (10), en particulier soupape de transmission hydraulique, comprenant
- un boîtier de soupape (12) avec un axe longitudinal (L) et une ouverture de réception (14) s'étendant le long de l'axe longitudinal (L), le boîtier de soupape (12) présentant une première ouverture d'écoulement (16) d'un raccord d'alimentation (P), une deuxième ouverture d'écoulement (18) d'un raccord de travail (A) et une troisième ouverture d'écoulement (20) d'un raccord de réservoir (T), les ouvertures d'écoulement (16, 18, 20) étant réalisées de manière à pouvoir être parcourues au moins en partie par un fluide hydraulique s'écoulant à travers le boîtier de soupape (12),
- un piston de soupape (22) déplaçable axialement dans le boîtier de soupape (12) dans l'ouverture de réception (14) le long de l'axe longitudinal (L) avec une rainure de commande (24),
- avec un dispositif de déplacement (26) pour déplacer axialement le piston de soupape (22), la rainure de commande (24) pouvant être positionnée par rapport aux ouvertures d'écoulement (16, 18, 20) à l'aide du dispositif de déplacement (26),
la rainure de commande (24) du piston de soupape (22), pour la compensation de forces d'écoulement du fluide hydraulique qui sont orientées de manière à agir à l'encontre d'une première position de commutation de la soupape hydraulique (10) dans laquelle le fluide hydraulique s'écoule à partir de la première ouverture d'écoulement (16) dans la deuxième ouverture d'écoulement (18), étant réalisée de manière à provoquer la compensation et la rainure de commande (24) présentant une première surface de commande (36) réalisée de manière tournée vers la première ouverture d'écoulement (16) et une deuxième surface de commande (38) réalisée à l'opposé de la première surface de commande (36), et la rainure de commande (24) présentant une troisième surface de commande (40) reliant la première surface de commande (36) à la deuxième surface de commande (38), la surface de commande (36) étant réalisée sous forme inclinée et/ou cintrée au moins en partie par rapport à la troisième surface de commande (40) ou par rapport à une surface virtuelle (84) réalisée parallèlement à la troisième surface de commande (40), et un élément de renvoi (48) étant réalisé entre la première surface de commande (36) et la deuxième surface de commande (38), **caractérisée en ce que** la première surface de commande (36) présente une première portion de surface (60) présentant une première arête de commande (42) et une deuxième portion de surface (62) disposée en position adjacente à la première portion de surface (60), la première portion de surface (60) étant réalisée de manière inclinée complètement par rapport à la troisième surface de commande (40) ou à la surface virtuelle (84) et un premier angle (α) ayant une valeur supérieure à 90° et inférieure à 180° étant réalisé entre la deuxième portion de surface (62) et la surface virtuelle (84), et
**en ce qu'**une première surface de paroi (54) de l'élément de renvoi (48), réalisée de manière tournée vers la première surface de commande (36), est réalisée sous forme inclinée de telle sorte qu'entre la troisième surface de commande (40) ou la surface virtuelle (84) et la première surface de paroi (54) soit formé un angle (β) qui est supérieur à 0° est inférieur à 90°.

2. Soupape hydraulique selon la revendication 1,
**caractérisée en ce qu'**une épaisseur (D) de l'élément de renvoi (48) dans la direction de la deuxième surface de commande (38) est réalisée de manière au moins uniforme ou croissante.

3. Soupape hydraulique selon l'une quelconque des revendications 1 et 2,
**caractérisée en ce qu'**une distance (AS) entre la première surface de commande (36) et une première surface de paroi (54) de l'élément de renvoi (48), réalisée de manière tournée vers la première surface de commande (36), est supérieure à une épaisseur de paroi (W) du boîtier de soupape (12) entre la première ouverture de passage (16) et la deuxième ouverture de passage (18) et est inférieure à l'épaisseur de paroi (W) plus un diamètre axial (d) de la deuxième ouverture de passage (18).

4. Soupape hydraulique selon l'une quelconque des revendications 1 à 3,
**caractérisée en ce qu'**une distance libre (FA) entre une deuxième surface de paroi ( ) de l'élément de renvoi (48) réalisée à l'opposé de la deuxième surface de commande et la deuxième surface de commande (38) est réalisée de manière à varier à partir d'un diamètre maximal (DD) de l'élément de renvoi (48) dans la direction de la troisième surface de commande (40), en particulier la distance libre (FA) est réalisée de manière à diminuer dans la direction de la troisième surface de commande (40).

5. Soupape hydraulique selon l'une quelconque des revendications précédentes,
**caractérisée en ce que** l'élément de renvoi (48) présente une bague (58) espacée de la première surface de commande (36), la bague (58) présentant une surface annulaire (86) réalisée parallèlement à la surface virtuelle (84).

6. Soupape hydraulique selon l'une quelconque des revendications précédentes,
**caractérisée en ce que** l'élément de renvoi (48) est réalisé sous forme annulaire de manière à entourer la rainure de commande (24).

7. Soupape hydraulique selon l'une quelconque des revendications précédentes,
**caractérisée en ce que** le dispositif de déplacement (26) présente un induit magnétique (32) et un élément de ressort (34), l'élément de ressort (34) étant disposé au niveau de la première extrémité (80) du boîtier de soupape (12) réalisée en position adjacente à la première ouverture d'écoulement (16) et l'induit magnétique (32) étant disposé au niveau de la deuxième extrémité (82) du boîtier de soupape (12) réalisée en position adjacente à la troisième ouverture d'écoulement (20).

8. Soupape hydraulique selon l'une quelconque des revendications précédentes,
**caractérisée en ce qu'**un élément d'étanchéité (88) est disposé dans le boîtier de soupape (12), lequel est traversé par une extrémité (80) du piston de soupape (22) réalisée sous forme de poussoir de piston.
